# EUROPEAN PATENT APPLICATION

(11) **EP 2 546 841 A1**
(43) Date of publication of application: **16.01.2013**
(21) Application number: 11752891.9
(22) Date of filing: 07.03.2011
(51) Int. Cl.: H01F 1/44, C01G 49/02, B82B 1/00, B82B 3/00, B82Y 30/00

(54) **METHOD FOR OBTAINING MATERIALS WITH SUPERPARAMAGNETIC PROPERTIES**

(30) Priority: 08.03.2010 ES 201030333
(71) Applicant: Consejo Superior De Investigaciones Científicas (CSIC), 28006 Madrid (ES)
(72) Inventor: RUIZ HITZKY, Eduardo, E-28049 Madrid (ES); ARANDA GALLEGO, María Pilar, E-28049 Madrid (ES); GONZÁLEZ ALFARO, Yorexis, E-28049 Madrid (ES)
(74) Representative: Pons Ariño, Maria Purificación
(86) International application number: PCT/ES2011/070145
(87) International publication number: WO 2011/110711

(57) **Abstract**

The invention relates to a method for obtaining materials, comprising the treatment of solids by means of interaction with ferrofluids in order to provide the end product with superparamagnetic properties at moderate temperatures. These superparamagnetic materials are produced by assembling nanoparticles of metal oxides, which are associated with a compound having a surfactant effect, such as oleic acid, and which are carried by a non-aqueous ferrofluid, with a different type of solid material, preferably having adsorbent properties, absorbent properties or reagent- and product-supporting properties. The invention also relates to the resulting material, as well as to the use thereof in different applications, such as for use: as adsorbents, as sensors, as ion exchangers, in the elimination of toxic or radioactive contaminants, in chromatographic separation processes, in medical and biological applications, as supports for biological materials such as enzymes, as polymer fillers, in the absorption of electromagnetic radiation, and as catalyst and metal oxide precursors

## Description

### Technical field

The present invention relates to a method for obtaining multifunctional micro- or nano-structured superparamagnetic materials prepared from non-aqueous ferrofluids and solid materials. Therefore, the invention falls within the field of new materials, while its applications are mainly in the chemical sector (adsorbent, absorbent, ion exchanger, catalyst, catalyst support and in chromatographic separation processes and other), the pharmaceutical and medical sectors (processes for the concentration, separation, control an targeted drug delivery, hyperthermia therapy) and the environmental area (water treatment, soil remediation, adsorption of gaseous pollutants, disposal of toxic and radioactive substances) and for polymer fillers (magnetic plastic and rubber, electromagnetic shielding panels) and as the active phase for magnetic sensors.

### Prior art

Ferrofluids are part of a new type of magnetic materials. These consist of a homogeneous dispersion composed of magnetic particles suspended in a liquid (carrier liquid), which may be a low polarity organic solvent. Magnetic ferrofluids are typically composed of nanoparticles of a ferromagnetic material whose size is in the order of 10 nm. The ferromagnetic material generally consists of Fe (II) and / or Fe (III) oxides and oxyhydroxides such as magnetite, hematite, maghemite, etc. and whose particles are coated with surfactants to avoid agglomeration due to the magnetic and Van Der Waals forces, allowing the formation of the ferrofluid when dispersed in solvents. It should be noted that ferrofluids do not in fact have a ferromagnetic behaviour as they do not retain magnetization in the absence of the applied magnetic field, but exhibit paramagnetic properties and because of their high magnetic susceptibility, they are considered "superparamagnetic" materials. An important property is that ferrofluids are polarized in the presence of an external magnetic field, thus they may be used in various sectors: industry, medicine, defence, etc.

One method of preparation of iron oxide nanoparticles with magnetic properties (superparamagnetic behaviour) is the so-called co-precipitation which, with slight variations, consists in the precipitation at a controlled pH of salts of the cations Fe²⁺ and Fe³⁺. This process can be performed in the presence of a surfactant which promotes the stability of the nanoparticle, also avoiding its agglomeration to maintain its superparamagnetic behaviour. A similar effect is achieved by subsequent treatment of the nanoparticles with the surfactant thereby performing the process in this case in two consecutive stages. Another alternative is the co-precipitation of iron salts with the formation of the nanoparticles from microemulsions.

To achieve the formation of ferrofluids containing iron oxide magnetic nanoparticles prepared using co-precipitation methods, in the presence of a surfactant, the addition of a solvent is required. When the nanoparticles are obtained in the absence of a surfactant, other procedures are used to form ferrofluids such as peptization methods that include the simultaneous use of a solvent and an additive with a surfactant effect. A specific example of this latter approach is the use of kerosene and oleic acid to stabilize magnetite nanoparticles forming a magnetic ferrofluid [J. M. Aquino, M. P. González Sandoval, M. M. Yoshida and O. A. Valenzuela, Materials Science Forum. 302-303 (1999) 455].

There are precedents in the immobilization of iron oxide nanoparticles in different types of solids that could be grouped into two types of procedures: i) in situ nanoparticle generation from different precursors; and ii) impregnating the solid with previously synthesized nanoparticles. An example relating to the first method includes the formation of nanoparticles of iron oxides and oxyhydroxides in the cavities of various zeolites and other porous materials, from different precursors of the type Fe (III) and / or Fe (II) polioxications, coordination complexes and iron salts [A.S. Teja, P.-Y. Koh, Prog. Cryst. Growth Ch., 55 (2009) 22 - 45] [A. Esteban-Cubillo, J.-M. Tulliani, C. Pecharromán, J. S. Moya, J. EUR. CERAM. SOC., 27 (2007) 1983 - 1989]. The second type of procedure involves the formation of a ferrofluid from iron oxide nanoparticles that can be obtained by different methods of synthesis, and which are stabilized with various compounds of the surfactant or polyelectrolyte type to achieve their stable dispersion in a liquid carrier which may be water or an organic solvent [J. M. Aquino, M. P. González Sandoval, M. M. Yoshida and O. A. Valenzuela, Materials Science Forum. 302 - 303 (1999) 455], [W. Zheng, F. Gao, H. Gu, J. MAGN. MAGN. MATER., 288 (2005) 403 - 410]. Also noteworthy is the work of Kekalo et al [K. Kekalo, V. Agabekov, G. Zhavnerko, T. Shutava, V. Kutavichus, V. Kabanov and N. Goroshko, J. MAGN. MAGN. MATER., 311 (2007) 63 - 67] which describes the preparation of adsorbent and magnetic materials by magnetic fluid impregnation or by magnetite nanoparticle assembly using impregnation and Layer-by-layer (LbL) techniques on different types of substrates such as activated carbon, lignocellulose fibres or glass. The method used by the authors to prepare nanoparticles with surfactants is developed in two stages, subsequently adding stabilizer compounds and mixtures of water with oleic acid and triethanolamine to form the ferrofluid [K. Kekalo, V. Agabekov, G. Zhavnerko, T. Shutava, V. Kutavichus, V. Kabanov and N. Goroshko, J. MAGN. MAGN. MATER., 311 (2007) 63 - 67]. In this example, though particles are seemingly superparamagnetic, all materials described show remanence in the hysteresis cycle indicating that the aggregation of nanoparticles is required upon assembly to the substrate. The method of the present invention, far simpler, performs the nanoparticle synthesis in a single step in the presence of the surfactant which acts as a stabilizer and only requires the addition of an organic solvent to form the ferrofluid. In addition, the compounds resulting from the assembly with various solids still retain the superparamagnetic properties of the iron oxide nanoparticles at room temperature. These properties allow a wide range of applications for the final magnetic materials.

Other remarkable works in this area are those of Esteban-Cubillo et al [A. Esteban-Cubillo, J.-M. Tulliani, C. Pecharromán, J. S. Moya, J. EUR. CERAM. SOC., 27 (2007) 1983 - 1989] [J. S. M. Corral, A. E. Cubillo, C. P. Garcia, L. Montanaro, J. M. Tullian, A. Negro, Spanish Patent, 200501554], which describe the immobilization of iron oxide nanoparticles in the sepiolite silicate using a direct assembly method by nanoparticle generation in the presence of said silicate. This procedure compared with that of the present invention generates materials with a heterogeneous dispersion of particles predominantly of the alpha-Fe₂O₃ (hematite) phase with varying particle size as shown in the transmission electron microscopy images [A. Esteban-Cubillo, J.-M. Tulliani, C. Pecharromán, J. S. Moya, J. EUR. CERAM. SOC., 27 (2007) 1983 - 1989].

### Brief description of the invention

The present invention is based on three main aspects:

A first aspect of the present invention is a method for obtaining a superparamagnetic material comprising formation thereof by treating solids with a non-aqueous ferrofluid of the type "iron oxide or oxyhydroxide / surfactant /organic solvent" in which the iron oxyhydroxides or oxides are nanoparticles having superparamagnetic properties at moderate temperatures.

A second aspect of the present invention is the superparamagnetic material of the invention obtained by the preceding procedure, resulting from the association of superparamagnetic nanoparticles of iron oxides and / or oxyhydroxides of associated with a compound with a surfactant effect, such as oleic acid, hereinafter the nanoparticles, present in a non-aqueous ferrofluid with a solid material having structural and / or functional properties to further confer superparamagnetic properties at moderate temperatures.

A third aspect of the present invention is the use of the aforementioned superparamagnetic material for various applications such as retention, adsorption, absorption, ion exchanger, catalyst, catalyst support, separation processes, concentration processes, chromatographic separation, controlled and targeted drug release, hyperthermia therapy, water treatment, soil remediation, adsorption of gaseous pollutants, elimination of toxic and radioactive substances as well as polymer fillers to produce magnetic plastic and rubber, electromagnetic shielding panels, active phase of magnetic sensors, etc.

### Detailed description of the invention

The present invention relates to a novel method for obtaining a type of superparamagnetic material, wherein the starting point is the preparation of iron oxide or oxyhydroxide nanoparticles associated with a compound having a surfactant effect such as oleic acid, with superparamagnetic properties , hereinafter the material of the invention. It has the particularity that said nanoparticles are incorporated into the material giving it superparamagnetic properties by interaction with a non-aqueous ferrofluid of the type "iron oxide or oxyhydroxide / surfactant / organic solvent", in which the iron oxides or oxyhydroxides associated with the compound with a surfactant effect, such as oleic acid, are nanoparticles with superparamagnetic properties at moderate temperatures, hereinafter the ferrofluid of the invention. Said preparation involves the immobilization of said nanoparticles on the surface of the solids by interaction with the ferrofluid.

Therefore, in a first aspect, the present invention relates to a method for preparing a superparamagnetic material by treating solids with a ferrofluid, characterized in that it comprises the following steps:
a. Preparation of a solution of Fe (II) and Fe (III) salts.
b. Addition of a surfactant to the solution obtained in (a).
c. Reaction of the mixture obtained in (b) with a base.
d. Extraction of the nanoparticles obtained in step (c), washing with a polar organic solvent and drying of the material.
e. Dispersion of the nanoparticles obtained in step (d) in an organic solvent in order to obtain a ferrofluid.
f. Treatment of a material with the ferrofluid obtained in step (e).

In the present invention, "ferrofluid" is understood as a homogeneous dispersion consisting of magnetic particles suspended in the carrier liquid which has the property of giving a magnetic response in the presence of an external magnetic field. The ferrofluids are composed of ferromagnetic particles suspended in a carrier fluid, which is commonly an organic solvent or water. The ferromagnetic nanoparticles are coated with a surfactant to prevent agglomeration caused by the magnetic and Van der Waals forces. The ferrofluids show paramagnetism and are usually defined as "superparamagnetic" due to their large magnetic susceptibility.

In the present invention "nanoparticle" is understood as a particle whose dimensions are less than 100 nm.

In a preferred embodiment, the Fe salts used in step (a) are selected from among sulphates, chlorides, nitrates or acetates.

In another preferred embodiment, the surfactant used in step (b) is a fatty acid having a chain of C₁₀ to C₂₀ of the type which is present among the components of a vegetable oil such as olive oil, palm oil, peanut oil, sunflower oil, rapeseed oil and soybean oil. Preferably said fatty acid is selected from among oleic acid, stearic or linoleic acid.

In another preferred embodiment, the base used in step (c) is selected from among ammonium hydroxide, sodium hydroxide, potassium hydroxide, tetramethylammonium hydroxide, tetraethylammonium hydroxide or tetrabutylammonium hydroxide.

The nanoparticles are prepared by a known procedure of co-precipitation from iron (II) and iron (III) salts in an aqueous basic medium such as that provided by ammonium hydroxide in the presence of a surfactant and thereafter washing with water and finally with a polar organic solvent which reduces the extent of the surfactant coating of the nanoparticles to approximately one monolayer.

An additional advantage of the method of the present invention with respect to procedures operating in aqueous medium is that it reduces the tendency toward spontaneous chemical alteration typical of nanoparticles of superparamagnetic iron oxides and oxyhydroxides becoming nonmagnetic oxides by oxidation reactions that are promoted in aqueous media.

In a preferred embodiment, the reaction of step (c) is performed at a temperature of between 75 °C and 95 °C. The ideal conditions for carrying out this reaction are at a temperature of 90 °C while stirring and for a time comprised between 1 and 3 hours.

In another preferred embodiment, the polar organic solvent used in step (d) is selected from a list comprising acetone, methyl ethyl ketone, methanol, ethanol, isopropanol, ethyl acetate and trichlorethylene.

In another preferred embodiment the polar organic solvent used in step (e) is selected from a list comprising n-heptane, n-octane, n-hexane, cyclohexane, toluene, benzene, petroleum ether and xylene.

In a more preferred embodiment the dispersion of nanoparticles in the organic solvent is carried out under ultrasonic irradiation for a time comprised between 5 and 15 minutes.

The present invention is understood as a material, any type of inorganic, organic or organic-inorganic hybrid solid, whether crystalline, vitreous or amorphous which preferably presents OH or NH groups in its surface interface including OH groups of carboxyl, sulphonic, phenol, etc. functions or including NH groups of amines, amides, amino acids, proteins, etc. This is especially the case of various metal oxides and hydroxides, of silica, silicates and silico-aluminium oxides, clays, zeolites and other zeotypes, porous ceramics, carbonaceous materials, certain polymeric materials, biopolymers, and composites of synthetic or natural origin such as polyamides, polyesters, polyurethanes, polystyrenes, cellulose, lignocellulose, cotton, wool, cork, etc.

In a preferred embodiment the material treated with the ferrofluid of the present invention is a particulate material with a particle size range of 10 nm to 50 mm.

The material can be formed in various ways: as plates, membranes, foams, fibres, fabrics, pellets or monolithic blocks of varying geometry (spheres, cylinders, cubes, etc.) with no size limit.

In another preferred embodiment the particulate or formed material is a porous solid with adsorptive properties. The use of porous materials is considered advantageous compared to non-porous ones due to their ability to adsorb the ferrofluid enabling the access and immobilization of the nanoparticles transported thereby to the surface of the solid. In addition, a greater surface area implies the possibility of incorporating a greater number of nanoparticles into the solid.

In another preferred embodiment the material is an inorganic solid.

In another even more preferred embodiment the inorganic solid is selected from the list comprising metal oxides and hydroxides, mixed oxides, silica and silicates, silico-aluminium oxides, phosphates, aluminophosphates, porous ceramics, carbonaceous materials, or any combination thereof.

A particular embodiment is one in which the solid is selected from the group of natural silica such as diatomaceous earth or synthetic silica such as silica gels and mesoporous silica of the MCM41 and SBA15 type.

Another particular embodiment is one in which the silicate is selected from among the group of natural or synthetic clays.

A more particular embodiment is that in which the clay is microfibrous clay such as sepiolite or palygorskite, also known as attapulgite.

A more particular embodiment is that in which the clay is a smectite clay such as montmorillonite, hectorite, saponite, stevensite, beidellite.

A more particular embodiment is that in which the clay is vermiculite.

Another particular embodiment is one in which the silicate is selected from among the group of zeolites and other zeotypes.

A more particular embodiment is one in which the zeolite is chosen from the list: phillipsite, chabazite, faujasite, mordenite, sodalite, heulandite, ferrierite, zeolite A, zeolite Y, zeolite X, zeolite ZSM-5, zeolite ZSM-11, Zeolon , Zeolite Omega.

Another particular embodiment is that in which the carbonaceous material is a material which is in the form of nanotubes, fibres, fabrics or membranes.

A more particular embodiment is that in which the carbonaceous material is a porous carbon of the type of activated carbon that may be in the form of powder, granular form, monoliths or pellets.

Another particular embodiment is that in which the material is selected from among layered double hydroxides with a hydrotalcite type structure or from hydroxy salts also called basic salts.

Another particular embodiment is that in which the material is selected from among porous ceramics of the type that are formed from magnesium oxide, aluminium oxide, silica or mixtures thereof.

In another preferred embodiment the material is organic or an organic-inorganic hybrid of natural or synthetic origin.

In a more preferred embodiment the material is natural of a skin, wool, cotton, wood, cork, sea sponges, vegetable fibres, etc. type.

In another preferred embodiment the material is paper or cardboard containing cellulose or its chemical derivatives, lignocellulose, etc.

In a more preferred embodiment the material is a synthetic polymer of the following types: polyamides, polyesters, polyurethanes, polystyrenes, polysulphones, etc.

In a more preferred embodiment the organic-inorganic hybrid material is a synthetic material derived from laminar or fibrous clays which is prepared by the interaction with organic or organosilicon compounds with different functionalities.

An even more preferred embodiment is one in which the clay derivative belongs to the group of so-called organoclays.

A particular embodiment is one in which the organoclay is a clay derivative of the smectite type or of the fibrous type marketed as Bentone, Cloisite, Pangel, etc.

Another even more preferred embodiment is one in which the clay derivative is a composite material wherein the clay is associated with one or more polymers and / or biopolymers.

A particular embodiment is one in which the clay derivative is a nanocomposite or bionanocomposite material.

The synergy between the two components, namely between the material and the nanoparticles of magnetic iron oxide associated to the compound having a surfactant effect, such as oleic acid, which provides the ferrofluid of the invention, gives the resulting material magnetic properties while preserving functional and / or structural characteristics of the solid, thus being of interest in processes of adsorption, ion exchange, molecular separation, etc.

Using ferrofluids as a carrier of magnetic nanoparticles immobilizing them with a homogeneous distribution on the surface of the solids, is in the present invention an advantage over other methods for the support of superparamagnetic nanoparticles described in the prior art, since this procedure allows for preparations at different scales, in a simplified manner by simply mixing or impregnating the solid with the ferrofluid at room temperature, avoiding agglomeration of nanoparticles (which could lead to loss of their superparamagnetic properties), with a high homogeneity of the nanoparticles on the support solid. The fact that the materials can be prepared and dried at moderate temperatures, or by supercritical drying treatments, means that the method can extend not only to the modification of inorganic solids, but also solids of an organic or organic-inorganic hybrid nature. Furthermore, the fact that the method of the invention operates at moderate temperatures is especially useful in saving energy for production on an industrial scale, compared to other methods using higher temperatures. The compound having a surfactant effect such as oleic acid, associated to the iron oxide nanoparticles, may be removed at will from the material resulting from treatment with the ferrofluid by means of heat treatment or extraction with polar solvents.

In a preferred embodiment, treating the material with ferrofluid is performed while stirring applying a procedure which is selected from a list comprising mechanical stirring, ultrasonic irradiation, bubbling with nitrogen or using another gas or combinations thereof.

In another even more preferred embodiment, the treatment of the particulate solids with the ferrofluid is performed by alternating mechanical stirring for 3 minutes followed by 15 minutes of ultrasonic irradiation which may be repeated several times.

In another preferred embodiment, the solid obtained by the method of the present invention is dried for the time required to remove the organic solvent at atmospheric pressure or reduced pressure at room temperature or by heating at moderate temperatures, as well as by supercritical drying, until finally obtaining the material of the invention.

In a preferred embodiment, the process of the present invention may have an additional step in which the resulting product is subjected to a heat treatment or extraction treatment with polar solvents to remove the surfactant layer associated to the iron oxide nanoparticles.

Another aspect of the present invention is a superparamagnetic material obtained by means of the method described above.

In a further aspect, the present invention relates to the use of superparamagnetic materials described above in various applications such as retention, adsorption and absorption processes, as an ion exchanger, as a catalyst or catalyst support, in of separation, chromatography and concentration processes, in controlled and targeted drug release, in hyperthermia therapy, for water treatment and soil remediation, for gaseous pollutant adsorption and removal of toxic or radioactive substances, such as fillers or additives in polymers to produce magnetic plastics and rubbers, in the manufacture of electromagnetic shielding panels and magnetic sensor active phase.

A preferred aspect of the present invention is using the superparamagnetic material of the invention as an adsorbent, i.e. as a material capable of trapping or retaining atomic, molecular or polymeric species on its surface or as an absorbent, i.e. as a material capable of incorporating those species into its volume, which can also be easily recovered from the medium by using an external magnetic field. When operating in water or other liquid media, the latter property has the advantage over other absorbent and adsorbent materials that decantation, filtration or centrifugation processes need not be applied as happens with adsorbents and absorbents that exhibit this superparamagnetic behaviour. It can also be applied to extensions not limited to containers, deposits or pipes, such as ponds, pools, rivers, lakes or the sea (ports, beaches, etc.). When operating on floors or other surfaces, it presents advantages equivalent to the above as regards to its easy recovery.

A more preferred aspect of the present invention is the use of the superparamagnetic material of the invention as liquid and gas adsorbent, adsorbent of pollutants in aqueous media, to retain pesticides and other toxic substances and radioactive products, allowing subsequent retrieval by an external magnetic field.

Another preferred aspect of the present invention is the use of the superparamagnetic material of the invention as an ion exchanger with the possibility of recovery of ionic species in solution.

Another preferred aspect of the present invention is the use of the superparamagnetic material of the invention as catalysts or catalyst supports with the possibility of being recovered from the medium in which they operate by applying an external magnetic field.

Another preferred aspect of the present invention is the use of the superparamagnetic material of the invention as separation and chromatography supports with the possibility of being recovered from the medium in which they operate by applying an external magnetic field.

Another preferred aspect of the present invention is the use of the superparamagnetic material of the invention as a substrate to capture, support, recover and concentrate species of biological origin such as enzymes, cells, viruses, etc. with the possibility of being recovered from the medium in which they operate by applying an external magnetic field.

Another preferred aspect of the present invention is the use of the superparamagnetic material of the invention as a polymer filler or additive to obtain plastics or rubbers with the possibility of presenting a superparamagnetic behaviour when applied to an external magnetic field.

Another more preferred aspect of the present invention is the use of the superparamagnetic material of the invention as a polymer filler or additive for use as components in electromagnetic radiation shielding panels.

Another preferred aspect of the present invention is the use of the superparamagnetic material of the invention in pharmacological and biomedical applications where the material is useful in processes of concentration, directed transport and controlled release of drugs, as well as in hyperthermia and contrast treatments in MRI.

Another preferred aspect of the present invention is the use of the superparamagnetic material of the invention as magnetic sensor active phase with a response based on the superparamagnetic behaviour when applied to an external magnetic field.

Another preferred aspect of the present invention is the use of the superparamagnetic material of the invention as an additive to confer a superparamagnetic behaviour to the solids in the form of plates, membranes, foams, fibres, fabrics, pellets or monolithic blocks of varying geometry (spheres, cylinders, cubes, etc.).

Throughout the description and claims the term "comprise" and its variants do not intend to exclude other technical features, additives, components or steps. For those skilled in the art, other objects, advantages and characteristics of the invention will emerge partly from the description and partly from practice of the invention. The following examples and figures are provided by way of illustration and are not intended to limit the scope of the present invention.

### DESCRIPTION OF THE FIGURES

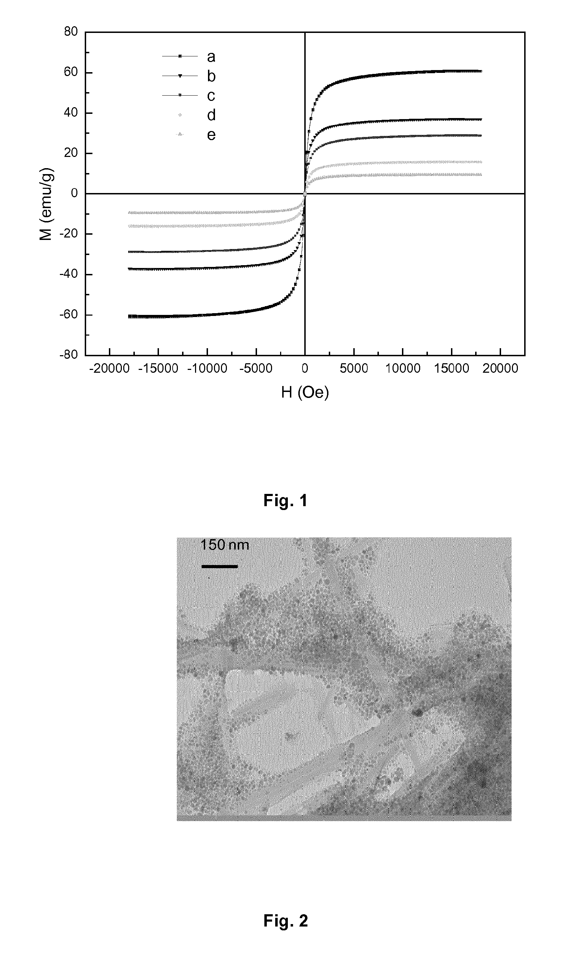

**Fig 1****.** Magnetization curves (M) against an external magnetic field (H) showing superparamagnetic behaviour at room temperature of the materials of the invention based on the sepiolite inorganic solid into which iron (II) and iron (III) oxide nanoparticles with oleic acid have been incorporated, as described in the present invention by treating Pangel S9 with the "magnetite / oleic acid / n-heptane" ferrofluid with different mass relative ratios of sepiolite / magnetite nanoparticles-oleic acid: 0 % (a), 50 % (b), 65 % (c) 80 % (d) and 90 % (e).

**Fig 2****.** Image obtained by transmission electron microscopy of the superparamagnetic material of the invention based on the sepiolite inorganic solid into which iron (II) and iron (III) oxide nanoparticles with oleic acid have been incorporated, as described in the present invention by treating with Pangel S9 with the "magnetite / oleic acid / n-heptane" ferrofluid.

### EXAMPLES

### Example 1. Superparamagnetic material based on sepiolite incorporating magnetite nanoparticles with oleic acid (50 %).

Firstly magnetite nanoparticles are obtained using the following co-precipitation method: 17.01 g of FeCl₃·6H₂O (99 % pure marketed by Sigma-Aldrich), 11.69 g of FeSO₄·7H₂O (99 % pure marketed by Sigma-Aldrich) are mixed in an Erlenmeyer flask and 140 ml of bi-distilled water is added. This solution is heated in a silicone oil bath at 90 °C, with conventional mechanical stirring at 164 rpm using a glass stirrer. Once the temperature has stabilized the surfactant is added (in this case, 3.15 ml of oleic acid (99 % pure marketed by Sigma-Aldrich) and then 42 ml of ammonium hydroxide (28 % pure marketed by Fluka) (25 %) is added, with a rapid reaction resulting in a black precipitate. The reaction is maintained at 90 °C for 3 hours with continuous stirring. Subsequently the solid is recovered with an iron-neodymium magnet; it is washed with bi-distilled water until reaching a neutral pH in the wash water. The resulting solid is then washed with approximately 50 ml of acetone (99.5 % pure available from Sigma-Aldrich) to remove excess oleic acid. The resulting product is dried at room temperature in a fume hood for approximately 5 hours. After this time it is ground in a mortar to yield about 11 g of a black powder characterized by X-ray diffraction (XRD), IR spectroscopy, differential thermal analysis (DTA) and thermogravimetric (TG) analysis, transmission electron microscopy (TEM), such as magnetite nanoparticles of approximately 10 nm coated with oleic acid. The study of the magnetic properties at room temperature of the resulting nanoparticles with a vibrating sample magnetometer (VSM) shows superparamagnetic behaviour with a saturation magnetization of around 70 emu / g.

In a second stage, 1 g of the obtained nanoparticles is dispersed in 20 ml of n-heptanes (with a purity of 99.5 % marketed by Fluka) thereby generating the ferrofluid. In a third step, 1 g of sepiolite supplied by TOLSA S.A. under the trade name Pangel S9 is mixed with the ferrofluid prepared in the preceding step, keeping the mixture under mechanical stirring (3 min) followed by irradiation in an ultrasonic bath (15 minutes), repeating this process 3 times. Thus the initial relative mass ratio of sepiolite / magnetite nanoparticles-oleic acid is 50 %.

The solvent (n-heptanes) is then eliminated at room temperature in a fume hood for approximately 24 hours. The dry product is ground in an agate mortar to obtain the porous material with superparamagnetic properties, characterized by XRD, IR spectroscopy, DTA-TG, MET, as a material composed of magnetite nanoparticles-oleic acid supported on sepiolite. The study of the magnetic properties at room temperature of the resulting material with an equipment indicates a superparamagnetic behaviour with a saturation magnetization of 30 emu / g. Magnetic measurement data at low temperature with and without an applied field (FC- ZFC technique) indicate that the superparamagnetic material present in the sample is 48 %. This datum indicates that almost 100 % of the initial relative mass ratio of sepiolite /magnetite nanoparticles-oleic acid has been retained. Through various techniques (XRD, TEM and FC -ZFC) it was established that the average size of magnetite nanoparticle associated to the sepiolite is around 10 nm.

### Example 2. Superparamagnetic material based on sepiolite incorporating magnetite nanoparticles with oleic acid (10 %).

Procedure is as in Example 1 except that in the second stage instead of using 1 g of magnetite nanoparticles-oleic acid, 0.20 g of said nanoparticles are used to form the ferrofluid, and in the third stage instead of using 1 g of sepiolite, 1.80 g are used so that the initial relative mass ratio of sepiolite /magnetite nanoparticles-oleic acid in the present case is 10 %. The study of the magnetic properties at room temperature of the resulting material with a VSM shows a superparamagnetic behaviour.

### Example 3. Superparamagnetic material based on sepiolite incorporating magnetite nanoparticles with oleic acid (20 %).

Procedure is as in Example 1 except that in the second stage instead of using 1 g of magnetite nanoparticles-oleic acid, 0.40 g of said nanoparticles are used to form the ferrofluid, and in the third stage instead of using 1 g of sepiolite, 1.60 g are used so that the initial relative mass ratio sepiolite /magnetite nanoparticles-oleic acid in the present case is 20 %. The study of the magnetic properties at room temperature of the resulting material with a VSM shows a superparamagnetic behaviour.

### Example 4. Superparamagnetic material based on sepiolite incorporating magnetite nanoparticles with oleic acid (35 %).

Procedure is as in Example 1 except that in the second stage instead of using 1 g of magnetite nanoparticles-oleic acid, 0.70 g of said nanoparticles are used to form the ferrofluid, and in the third stage instead of using 1 g of sepiolite, 1.30 g are used so that the initial relative mass ratio of sepiolite /magnetite nanoparticles-oleic acid in the present case is 35 %. The study of the magnetic properties at room temperature of the resulting material with a VSM shows a superparamagnetic behaviour.

### Example 5. Superparamagnetic material based on active carbon incorporating magnetite nanoparticles with oleic acid (50 %).

Procedure is as in Example 1 except that in the third stage, instead of using 1 g of sepiolite, 1 g of active carbon (Norit® RO 0.8 pellets, supplied by Sigma-Aldrich) is used with an initial relative ratio of active carbon / magnetite nanoparticles-oleic acid of 50 %. The study of the magnetic properties at room temperature of the resulting material with a VSM shows a superparamagnetic behaviour. Magnetic measurement data at low temperature with and without an applied field (FC - ZFC technique) indicate that the superparamagnetic material present in the sample is 19 %.

### Example 6. Superparamagnetic material based on silica gel incorporating magnetite nanoparticles with oleic acid (50 %).

Procedure is as in Example 1 except that in the third stage, instead of using 1 g of sepiolite, 1 g of silica gel Merck 60 (supplied by Merck) is used giving a relative ratio of silica gel / magnetite nanoparticles-oleic acid of 50 %. The study of the magnetic properties at room temperature of the resulting material with a VSM shows a superparamagnetic behaviour.

### Example 7. Superparamagnetic material based on silico-alumina incorporating magnetite nanoparticles with oleic acid (50 %).

Procedure is as in Example 1 except that in the third stage, instead of using 1 g of sepiolite,1 g of silico-alumina granulate (Ketjen LA-3P sample supplied by Akzo Chemie) is used giving an initial relative ratio of silico-alumina / magnetite nanoparticles-oleic acid of 50 %. The study of the magnetic properties at room temperature of the resulting material with a VSM shows a superparamagnetic behaviour.

### Example 8. Superparamagnetic material based on a layered double hydroxide (LDH) of magnesium and aluminium incorporating magnetite nanoparticles with oleic acid (50 %).

Procedure is as in Example 1 except that in the third stage, instead of using 1 g of sepiolite, 1 g of LDH is used, synthesized in the laboratory by the co-precipitation procedure from aluminium and magnesium chlorides controlling a pH of 9 with addition of a 1 M solution of NaOH, giving a relative ratio of LDH /magnetite nanoparticles-oleic acid of 50 %. The study of the magnetic properties at room temperature of the resulting material with a VSM shows a superparamagnetic behaviour.

### Example 9. Superparamagnetic material based on gelatin-sepiolite bionanocomposite foam incorporating magnetite nanoparticles with oleic acid (50 %).

Procedure is as in Example 1 except that in the third stage a cubic block with a 1 cm side is immersed in the ferrofluid; said cubic block is constituted by a foam material of a gelatin-sepiolite bionanocomposite prepared in the ICMM laboratories according to the procedure described in the patent registered by E. Ruiz-Hitzky et al (E. Ruiz-Hitzky, P. Aranda, M. Darder, Moreira Martins Fernandes, C.R. Santos Matos, "Composite-type rigid foams based on biopolymers combined with fibrous clays and preparation method thereof"; In the name of: CSIC. Spanish patent P. 200900104 (Application: 14/01/2009) and PCT extension: ES2009/070542 (Application: 01/12/2009). The block is left in contact with the ferrofluid for 5 minutes, then removed and placed in a Petri dish to remove the solvent (n-heptanes) at room temperature in a fume hood for approximately 24 hours. The study of the magnetic properties at room temperature of the resulting material with a VSM shows a superparamagnetic behaviour.

### Example 10. Using the superparamagnetic material based on sepiolite / magnetite nanoparticles-oleic acid (50 %) to remove the methylene blue present in water.

300 mg of the material obtained as described in example 1 are used, which are added to 20 ml of an aqueous solution of methylene blue 10⁻⁵ M. The mixture is mechanically stirred for 5 minutes and the dispersion formed is allowed to stand during another 5 minutes. Subsequently an iron-neodymium magnet is introduced into the dispersion noting that all the solid material is attracted by the magnet dragging with it the methylene blue while the liquid becomes transparent. The adsorbed amount of methylene blue which is checked to be complete by determination by UV-visible spectroscopy of the mother liquor.

## Claims

1. Method for preparing a superparamagnetic material **characterized in that** it comprises the following steps:
a. Preparation of a solution of Fe (II) and Fe (III) salts.
b. Addition of a surfactant to the solution obtained in (a).
c. Reaction of the mixture obtained in (b) with a base.
d. Extraction of the nanoparticles obtained in step (c), washing with a polar organic solvent and drying the material.
e. Dispersion of the nanoparticles obtained in step (d) in an organic solvent to obtain a ferrofluid.
f. Treatment of a material with the ferrofluid obtained in step (e).

2. Method according to claim 1 **characterized in that** the Fe salts used in step (a) are selected from among sulphates, chlorides, nitrates or acetates.

3. Method according to any of claims 1 or 2 **characterized in that** the surfactant used in step (b) is a C₁₀ to C₂₀ chain length fatty acid.

4. Method according to claim 3 **characterized in that** the C₁₀ to C₂₀ chain length fatty acid is selected from among oleic, stearic or linoleic acid.

5. Method according to any of claims 1 to 4 wherein the base used in step (c) is selected from among ammonium hydroxide, sodium hydroxide, potassium hydroxide, tetramethylammonium hydroxide, tetraethylammonium hydroxide, tetrabutylammonium hydroxide.

6. Method according to any of claims 1 to 5 **characterized in that** the reaction of step (c) is performed at a temperature of between 75 °C and 95 °C.

7. Method according to any of claims 1 to 6 **characterized in that** the polar organic solvent used in step (d) is selected from a list comprising acetone, methyl ethyl ketone, methanol, ethanol, isopropanol, ethyl acetate and trichlorethylene.

8. Method according to any of claims 1 to 7 **characterized in that** the organic solvent used in step (e) is selected from a list comprising n-heptanes, n-octane, n-hexane, cyclohexane, toluene, benzene, petroleum ether and xylenes.

9. Method according to any of claims 1 to 8 wherein the solid treated with the ferrofluid is an inorganic solid which is selected from a list comprising metal oxides and hydroxides, mixed oxides, silica and silicates, aluminium oxides, silico-aluminium oxides, phosphates, aluminophosphates, porous ceramic, carbonaceous materials or any combination thereof.

10. Method according to claim 9 wherein the solid treated with the ferrofluid is selected from among natural silica, synthetic silica, layered double hydroxides, natural or synthetic clays, natural or synthetic zeolites, carbonaceous materials in the form of nanotubes, fibres, pellets, monoliths, tissues or membranes, glass materials or porous ceramics.

11. Method according to any of claims 1 to 8 wherein the solid treated with the ferrofluid is an organic or organic-inorganic hybrid solid of natural or synthetic origin which is selected from among cellulosic materials, lignocellulosic materials, polymeric materials, hybrid materials derived from clays, silica, silicic base glass or any combination thereof.

12. Method according to claim 11 wherein the solid treated with the ferrofluid is selected from among fur, wool, cotton, wood, cork, sea sponges, vegetable fibres, paper, cardboard, polyamides, polyesters, polyurethanes, polystyrenes, polysulphones, organoclays, nanocomposites or bionanocomposites.

13. Method according to any of claims 1 to 12 wherein the treatment of the solid with the ferrofluid is performed by a method selected from among dipping, coating, impregnation or infiltration.

14. Method according to any of claims 1 to 13 **characterized in that** the treatment of the material with the ferrofluid is performed under stirring using a procedure which is selected from a list comprising mechanical stirring, ultrasonic irradiation and bubbling with nitrogen or another gas.

15. Method according to any of claims 1 to 14 **characterized in that** the material obtained in step (f) undergoes a drying process which is selected from among atmospheric pressure drying, reduced pressure drying or supercritical drying.

16. Method according to claim 15 further comprising an additional step (g) in which the material resulting from step (f) is subjected to thermal treatment or extraction with polar solvents.

17. Superparamagnetic material obtained by the method according to any of claims 1 to 16.

18. Use of the superparamagnetic material according to claim 17 in processes of uptake, retention, adsorption and absorption, ion exchange, catalysis and biocatalysis, pesticide support, cell support, enzymes or biological fragments, separation, concentration and chromatography, controlled and targeted drug release, hyperthermia therapy, water treatment and remediation of soil, adsorption of gaseous pollutants, collection and disposal of toxic or radioactive substances, fillers or additives for polymers, manufacture of electromagnetic shielding panels and magnetic sensors.

19. Use of a non-aqueous ferrofluid comprising nanoparticles of metal oxides associated with a surfactant dispersed in one or more organic solvents to obtain materials with superparamagnetic properties.
